# EUROPEAN PATENT APPLICATION

(11) **EP 2 151 934 A1**
(43) Date of publication of application: **10.02.2010**
(21) Application number: 08721716.2
(22) Date of filing: 10.03.2008
(51) Int. Cl.: H04J 11/00, H04B 7/06, H04J 15/00, H04Q 7/32, H04Q 7/36

(54) **COMMUNICATION APPARATUS**

(30) Priority: 28.05.2007 JP 2007140736
(71) Applicant: Mitsubishi Electric Corporation, Chiyoda-ku Tokyo 100-8310 (JP)
(72) Inventor: USUI, Tsutomu, Tokyo 100-8310 (JP); ISHIZU, Fumio, Tokyo 100-8310 (JP); SOGABE, Yasushi, Tokyo 100-8310 (JP); TOMINAGA, Tsuyoshi, Tokyo 100-8310 (JP)
(74) Representative: Pfenning, Meinig & Partner GbR
(86) International application number: PCT/JP2008/054300
(87) International publication number: WO 2008/146515

(57) **Abstract**

A communication apparatus according to the present invention includes a plurality of antennas; a pre-processing unit (1) that, according to an instruction from a higher-level layer, performs processing on each zone generated by time-division of a transmission frame and generates a transmitting signal; and post-processing units (2-1, 2-2) that transmit the transmitting signal generated corresponding to each zone via one or more of the antennas. Each post-processing unit is **characterized by** transmission of a preamble via each of the antennas. Thus, each post-processing unit transmits the preamble in a format that enables a receiving side to correctly determine AGC power control amount.

## Description

### TECHNICAL FIELD

The present invention relates to a frame transmission method in radio communications to which OFDMA (Orthogonal Frequency Division Multiple Access) technique is applied.

### BACKGROUND ART

In recent years, a number of studies have been undertaken regarding radio communication to which OFDMA technique is applied. For example, rules for radio communication by OFDMA technique are specified in Nonpatent Literature 1 mentioned below. In the OFDMA technique described in Nonpatent Literature 1 mentioned below, a base station (BS: Base Station) and a mobile station (MS: Mobile Station) perform communication by dividing respective allocated frequency band in a plurality of sub-channels and allocating data on sub-channel basis for transmission.

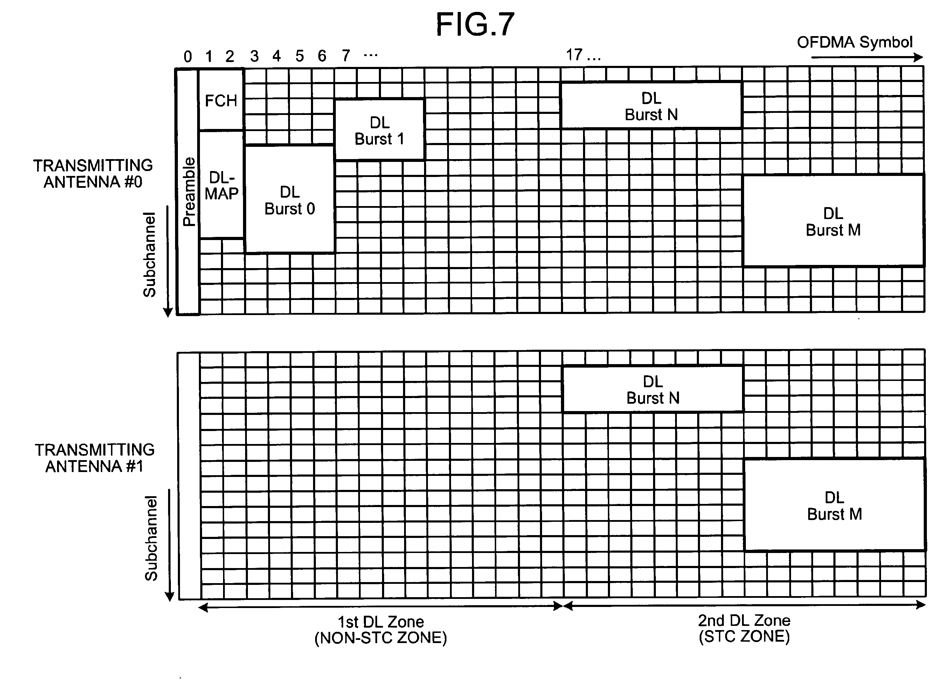

Fig. 7 is a schematic diagram of an exemplary DL sub-frame (a sub-frame transmitted from a BS to a MS used in OFDMA technique of IEEE802.16 standard. According to the example shown in Fig. 7, a preamble is inserted in a header OFDMA symbol (0th OFDMA symbol in Fig. 7) of the DL sub-frame and a FCH (Frame Control Header), a DL-MAP, and a DL Burst (can also be allocated in plurality) are allocated from a 1st and a second OFDMA symbols onward. Meanwhile, it is assumed that the DL sub-frame in Fig. 7 is transmitted from a BS equipped with two transmission antennas (transmitting antennas #0 and #1).

The DL sub-frame can be divided in a plurality of zones along the temporal axis. The zone next to the preamble is referred to as 1st DL zone (1st DL Zone) and the subsequent zones are referred to as 2nd DL zone (2nd DL Zone), 3rd DL zone, and so on. In the example shown in Fig. 7, the DL sub-frame includes two zones. An arbitrary permutation technique is applied to each zone. In addition, PUSC (Partial Usage of SubChannels) technique or STC (Space Time Coding) technique can also be applied. In the present example, the 1st DL zone is assumed to be a PUSC zone (a zone in which transmission is not performed by STC technique), while the 2nd DL zone is assumed to be a STC (STC in PUSC) zone. In a STC zone (i.e., a zone for transmission by STC technique), a signal is transmitted from each antenna. In any other type of zone (herein, preamble and PUSC zone), a signal is transmitted from only one single antenna (the transmitting antenna #0 in the example shown in Fig. 7). Meanwhile, hereinafter, a zone for transmission not by STC technique (equivalent to, for example, the PUSC zone) is referred to as "non-STC zone".

Nonpatent Literature 1: "IEEE Std 802.16-2004", 1 October 2004

### DISCLOSURE OF INVENTION

### PROBLEM TO BE SOLVED BY THE INVENTION

Generally, in a radio communication system employing OFDMA technique, the receiving side (MS) of a DL sub-frame determines AGC (Auto Gain Control) power control amount by using the power value of the preamble. Consider the example shown in Fig. 7. If the received power level of a signal transmitted from each of the transmitting antennas #0 and #1 is comparable, then it is possible to properly determine the AGC power control amount by using the received power of the preamble transmitted from the transmitting antenna #0. In comparison, if the received power level of a signal transmitted from the transmitting antenna #0 is substantially lower than the received power level of a signal transmitted from the transmitting antenna #1, then the AGC power control amount becomes too large and the power-controlled signal gets saturated.

The present invention has been made to solve the above problems in the conventional technology and it is an object of the present invention to provide a communication apparatus that is used in radio communication by OFDMA technique and that transmits a signal (preamble) in such a format (transmission format) that the receiving side can correctly determine the AGC power control amount even when the received power level of the signal transmitted simultaneously from a plurality of transmitting antennas is detected to be substantially different at the receiving side.

### MEANS FOR SOLVING PROBLEM

In order to solve the above-mentioned problems, the communication device according to the present invention is constructed in such a manner that it is equipped with a plurality of antennas, and comprises: a signal generating unit that, according to an instruction from a higher-level layer, performs processing on each zone generated by time-division of a transmission frame and generates transmitting signals corresponding to the number of zones; and a transmitting unit that transmits the transmitting signal generated corresponding to each zone from one or more than one antennas, wherein prior to transmitting the transmitting signals generated by the signal generating unit, the transmitting unit transmits a preamble from each of the antennas.

### EFFECT OF THE INVENTION

According to an aspect of the present invention, a communication apparatus transmits a preamble via a plurality of transmitting antennas. That enables a receiving side to determine AGC power control amount according to the received power level of the preamble that has been transmitted from the plurality of transmitting antennas. Thus, for example, even when the received power level of the signal transmitted simultaneously from the plurality of transmitting antennas is detected to be substantially different at the receiving side, the receiving side is able to correctly determine the AGC power control amount, enabling thus to achieve enhancement in the system throughput.

### BRIEF DESCRIPTION OF DRAWINGS

[Fig. 1] Fig. 1 is a schematic diagram of an exemplary configuration of a communication system including a communication apparatus according to a first embodiment of the present invention.
[Fig. 2] Fig. 2 is a schematic diagram of an exemplary configuration of a transmitting device disposed in the communication apparatus according to the present invention. [Fig. 3] Fig. 3 is a schematic diagram of an exemplary configuration of a common receiving device in a communication apparatus on the receiving side.
[Fig. 4-1] Fig. 4-1 is a schematic diagram of exemplary received power levels of a signal received by a receiving side from a communication apparatus including two transmitting antennas.
[Fig. 4-2] Fig. 4-2 is a schematic diagram of exemplary received power levels of a signal received by a receiving side from a communication apparatus including two transmitting antennas.
[Fig. 5] Fig. 5 is a schematic diagram of an exemplary configuration of a DL sub-frame transmitted by the communication apparatus according to the first embodiment.
[Fig. 6] Fig. 6 is a schematic diagram of an exemplary configuration of a DL sub-frame transmitted by a communication apparatus according to a third embodiment.
[Fig. 7] Fig. 7 is a schematic diagram for explaining a conventional technology.

### EXPLANATIONS OF LETTERS OR NUMERALS

- 1: pre-processing unit
- 2-1, 2-2: post-processing unit
- 3-1, 3-2: transmitting antenna
- 11: CRC Append unit
- 12: Padding unit
- 13: Randomize unit
- 14: FEC unit
- 15: Interleave unit
- 16: Repetition Coding unit
- 17: Modulation unit
- 18: Boosting unit
- 19: Slot Mapping unit
- 21: Permutation unit
- 22: Pilot unit
- 23: Subcarrier Randomize unit
- 24: Preamble unit
- 25: IFFT unit
- 26: GI Insert unit
- 27: Filter unit

### BEST MODE(S) FOR CARRYING OUT THE INVENTION

Exemplary embodiments for a communication apparatus according to the present invention will be described below in detail with reference to the accompanying drawings. The present invention is not limited to the embodiments described below.

### First embodiment

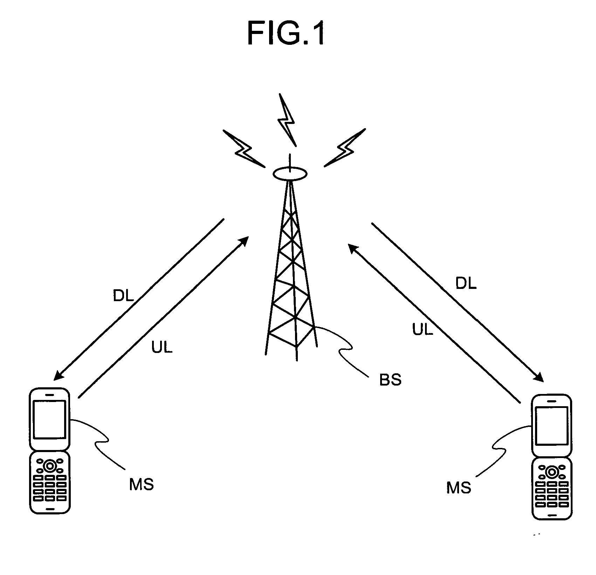

Fig. 1 is a schematic diagram of an exemplary configuration of a communication system including a communication apparatus according to a first embodiment of the present invention. The communication system employs OFDMA technique (for example, OFDMA technique of IEEE802.16 standard) for communication and includes a base station (BS) and mobile stations (MS). During communications, the BS transmits signals to a MS via a down link (DL: Down Link) and a MS transmits signals to the BS via an UL (Up Link). In the example shown in Fig. 1, the BS corresponds to the communication apparatus according to the present invention. Meanwhile, although the following description is given for communications by the OFDMA technique of IEEE802.16 standard, other communication techniques can also be employed.

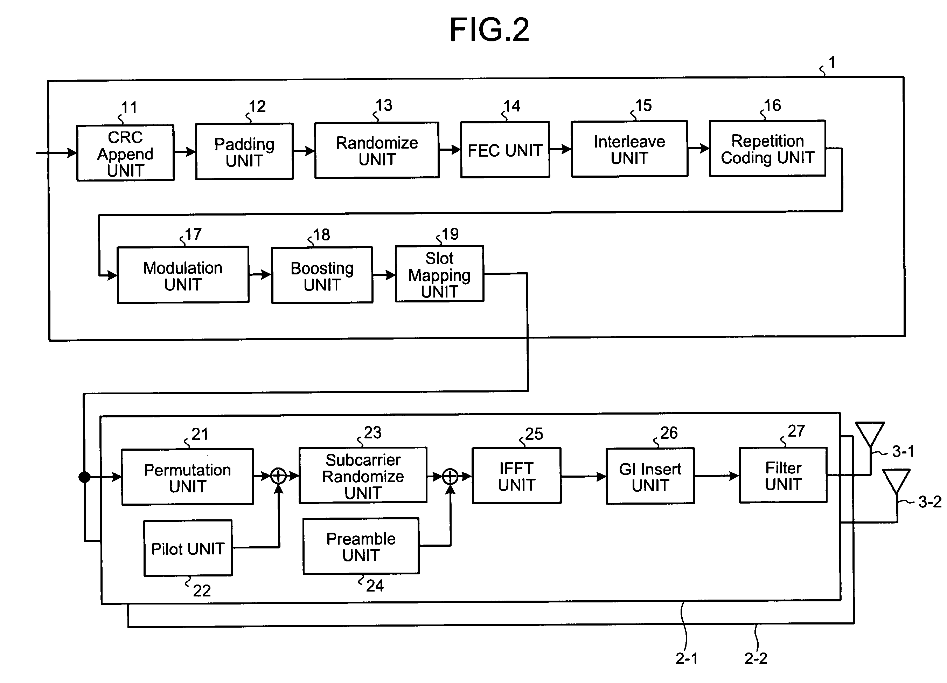

Fig. 2 is a schematic diagram of an exemplary configuration of a transmitting device disposed in the communication apparatus (corresponding to the BS in Fig. 1) according to the present invention. The transmitting device includes a single pre-processing unit 1 that functions as a signal generating unit, a plurality of post-processing units (post-processing units 2-1 and 2-2) that function as transmitting units, and a plurality of antennas 3-1 and 3-2. The pre-processing unit 1 includes a CRC append unit 11, a padding unit 12, a randomize unit 13, an FEC unit 14, an interleave unit 15, a repetition coding unit 16, a modulation unit 17, a boosting unit 18, and a slot mapping unit 19. Each of the post-processing units 2-1 and 2-2 includes a permutation unit 21, a pilot unit 22, a subcarrier randomize unit 23, a preamble unit 24, an IFFT unit 25, a GI insert unit 26, and a filter unit 27. Meanwhile, although the following description is given for a configuration including two transmitting antennas (i.e., for two systems each including a post-processing unit and a transmitting antenna), the description is also applicable to a configuration including more than two transmitting antennas.

Given below is the description, with reference to Fig. 2, of DL sub-frame transmission performed by the transmitting device. In the pre-processing unit 1, first, the CRC append unit 11 follows an instruction from a higher-level layer (such as MAC) and appends a CRC code to bits (transmission data) received from the higher level. Then, the padding unit 12 appends bits to the data output from the CRC append unit 11 to make that data have a predetermined length. The randomize unit 13 performs randomization on the bit-appended data and the FEC unit 14 encodes the randomized data. Subsequently, the interleave unit 15 performs interleave processing on the encoded data. The repetition coding unit 16 performs repetitive encoding on the interleaved data and the modulation unit 17 performs modulation on the repetitively-encoded data. Then, the boosting unit 18 performs power control on the modulated data and the slot mapping unit 19 maps the power-controlled data to a specified area in the DL sub-frame.

In each post-processing unit (post-processing units 2-1 and 2-2), the permutation unit 21 follows an instruction from the higher-level layer and performs permutation on each zone of an input signal, which has been output from the pre-processing unit 1, according to an independently specified permutation technique. The pilot unit 22 outputs a pilot subcarrier that is inserted in the signal output by the permutation unit 21. Then, the subcarrier randomize unit 23 receives that signal and performs randomization (performs phase inversion when necessary) on each subcarrier constituting the received signal. The preamble unit 24 outputs a preamble that is inserted in the randomized signal. Then, the IFFT unit 25 receives that signal and performs IFFT processing on the received signal. The GI insert unit 26 inserts a GI (Guard Interval) in the signal output from the IFFT unit 25 and the filter unit 27 performs a waveform shaping on the signal output from the GI insert unit 26. The signal output from the filter unit 27 is then transmitted by the corresponding transmitting antenna.

Meanwhile, when the higher-lever layer instructs transmission by a zone specified for STC technique (STC zone), a plurality of post-processing units perform the above-mentioned processing (signal transmission processing). On the other hand, when the higher-lever layer instructs transmission by a zone not specified for STC technique (non-STC zone), only a single post-processing unit performs the abovementioned processing.

As described above, in the case of transmitting the preamble or transmitting data by a non-STC zone, a conventional transmitting device transmits the sub-frame via a single antenna. On the other hand, in the case of transmitting data by a STC zone, a conventional transmitting device transmits the sub-frame via each antenna.

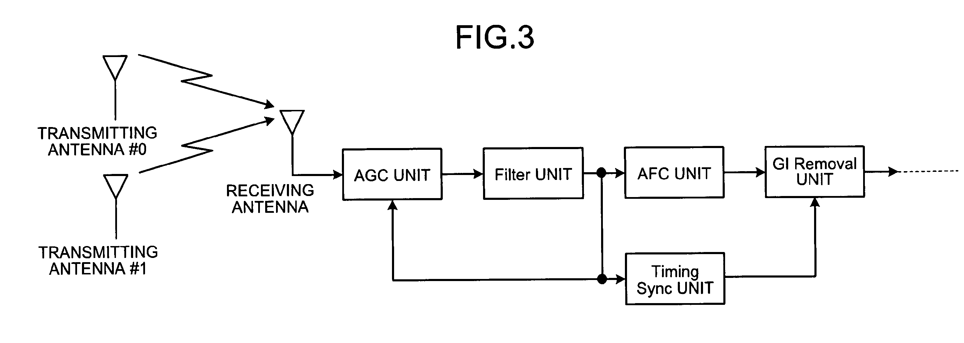

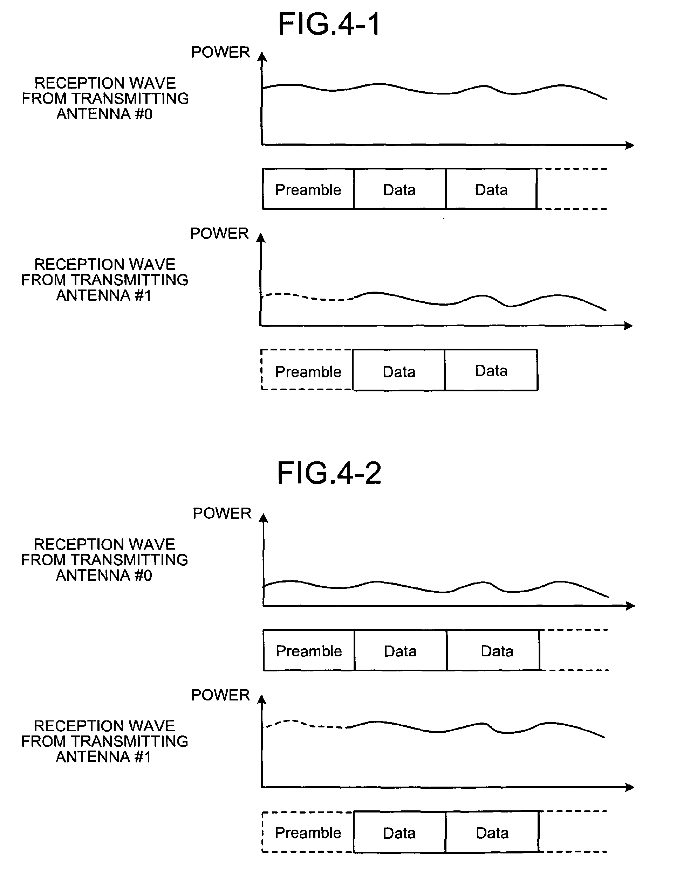

However, in a conventional configuration, when the transmitting side transmits the preamble via a single transmitting antenna, there is a possibility that the receiving side (corresponding to the MS in Fig. 1) is not able to correctly set the AGC power control amount, which may cause deterioration in the communication quality. This situation is described below with reference to Figs. 3, 4-1, and 4-2. Fig. 3 is a schematic diagram of an exemplary configuration of a common receiving device in a communication apparatus on the receiving side. Figs. 4-1 and 4-2 are schematic diagrams each depicting exemplary received power levels of a signal received by the receiving side from a transmitting device via two transmitting antennas (transmitting antennas #0 and #1). Herein, it is assumed that the preamble is transmitted via the transmitting antenna #0.

In the receiving device shown in Fig. 3, an AGC unit determines the AGC power control amount based on the received signal (preamble) output from a filter unit. More particularly, the AGC unit determines the power control amount by using the power level of the preamble.

As shown in Fig. 4-1, when the power level of a reception wave from the transmitting antenna #0 is sufficiently higher than the power level of a reception wave from the transmitting antenna #1, the power level of the reception wave from the transmitting antenna #0 becomes predominant in the AGC power control amount. In that case, the receiving device can accurately determine the power control amount even if no preamble is transmitted via the transmitting antenna #1. In comparison, when the power level of the reception wave from the transmitting antenna #0 is not sufficiently higher than the power level of the reception wave from the transmitting antenna #1, the impact of the reception wave from the transmitting antenna #1 cannot be ignored. In that case, it is likely that the power control amount cannot be determined properly using only the power level of the preamble transmitted from the transmitting antenna #0. For example, as shown in Fig. 4-2, if the power level of the reception wave from the transmitting antenna #0 is lower than the power level of the reception wave from the transmitting antenna #1, then sometimes the power control amount becomes too large thereby causing saturation.

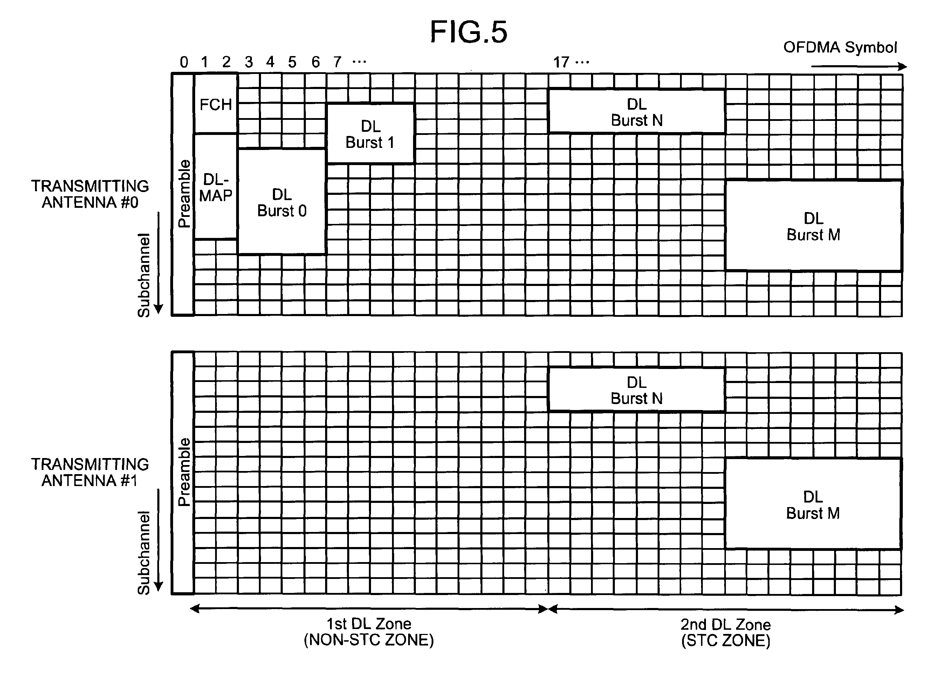

To avoid such a problem, the transmitting device in the communication apparatus according to the present invention transmits the preamble from each transmitting antenna as shown in Fig. 5. Meanwhile, if three or more transmitting antennas are installed in the communication apparatus, it is desirable that the preamble is transmitted from all the transmitting antennas. That enables the receiving side to properly determine the AGC power control amount according to the transmission channel environment between the transmitting antennas and a receiving antenna. In thus case, however, the transmitted power level of each preamble is reduced to 1/N-th of the transmitted power level in comparison with the case in which the preamble is transmitted from a single transmitting antenna, where N is the number of transmitting antennas from which the preamble is transmitted. As a result, the maximum value of the overall transmitted power from the transmitting device can be maintained within a specified level.

In this way, according to the present embodiment, the transmitting device transmits the preamble via a plurality of transmitting antennas and the receiving side determines the AGC power control amount based on the received power level of the preamble transmitted from each transmitting antenna. Thus, for example, even when the received power level of the signal transmitted simultaneously from a plurality of transmitting antennas is detected to be substantially different at the receiving side, the receiving side is able to correctly determine the AGC power control amount. That enables achieving enhancement in the system throughput.

Moreover, the total of the transmitted power from each transmitting antenna is maintained at the same level of the transmitted power as the case in which the preamble is transmitted from a single transmitting antenna. Thus, the transmitted power level from each transmitting antenna decreases as compared to the transmitted power level in a conventional configuration. That enables achieving a simpler amplifier design.

### Second embodiment

Given below is the description of a communication apparatus according to a second embodiment. The configuration of a transmitting device in the communication apparatus according to the present embodiment is identical to that according to the first embodiment. In the first embodiment, the communication apparatus transmits a preamble via each transmitting antenna to enable the receiving side to correctly determine the AGC power control amount. However, when the preamble is transmitted from each transmitting antenna, sometimes the power level of a synthesized reception wave at a receiving antenna on the receiving side dips to a lower level. For example, consider a case when, at the receiving antenna, there is a phase difference of 180° in the phases of a preamble transmitted from two transmitting antennas. In that case, these phases are balanced each other, causing thereby the power level of the synthesized reception wave to decrease. Because of that, the AGC power control amount is not set correctly, which causes deterioration in the communication quality.

To avoid such a problem, the transmitting device according to the present embodiment shifts the transmission timing while transmitting the preamble from each transmitting antenna. For that, for example, one option can be to use a fixed value (shifted amount) that has been determined in advance by a simulation or the like. Another option can be to start the transmission by using an initial value determined in advance by a simulation or the like and suitably adjust the transmission timing based on the information obtained during the transmission (information such as the condition of transmission channel notified by the corresponding communication apparatus on the receiving side, the condition of transmission channel estimated based on the received signal from the corresponding receiving side, etc.). Meanwhile, the shift (shifted amount) in the transmission timing is maintained within a guard interval length and the transmission timing is shifted, for example, after performing IFFT.

In this way, while transmitting the preamble via a plurality of antennas, the transmitting device according to the present embodiment shifts the transmission timing for each transmitting antenna. Consequently, the transmitted signals are balanced each other, thereby decrease in the power level at the receiving side and deterioration in the communication quality are prevented.

### Third embodiment

Given below is the description of a communication apparatus according to a third embodiment. The configuration of a transmitting device in the communication apparatus according to the present embodiment is identical to that according to the first embodiment. In the first embodiment, the communication apparatus transmits a preamble from each transmitting antenna to enable the receiving side to correctly determine the AGC power control amount. In the present embodiment, the communication apparatus enables achieving further enhancement in the communication quality.

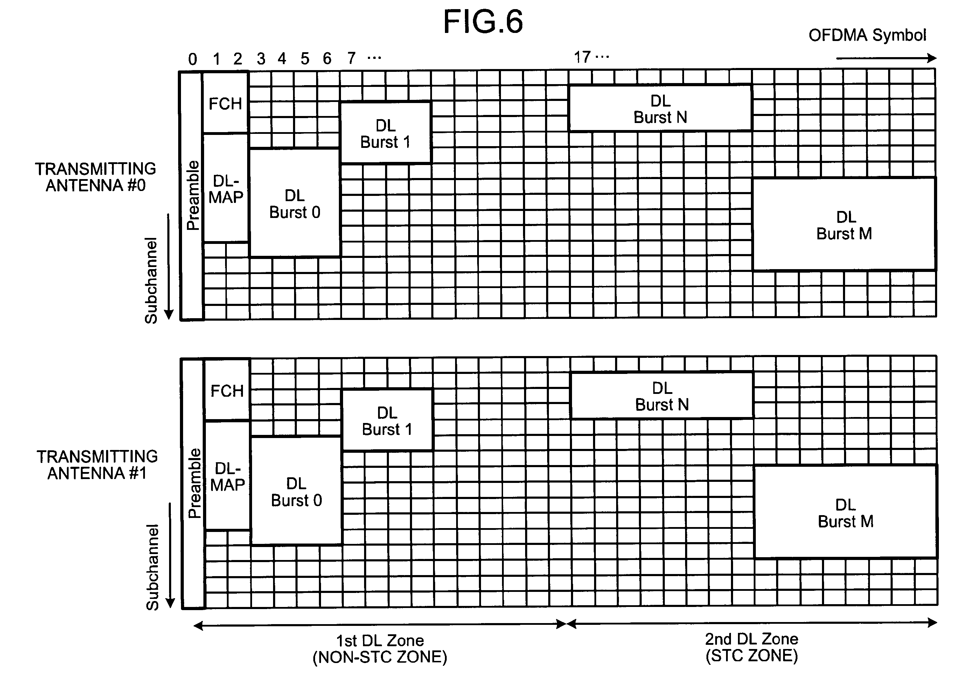

For the transmission of a preamble and for the transmission by a STC zone (equivalent to the 2nd DL Zone shown in Fig. 5) in the communication apparatus according to the first and second embodiments, a signal is transmitted from each transmitting antenna. In addition to that, in the communication apparatus according to the present embodiment, a signal is transmitted from a plurality of transmitting antennas also for the transmission by a non-STC zone (1st DL Zone) as shown in Fig. 6. That is, for the transmission by a zone that is specified for transmission not by STC technique (non-STC zone) in accordance with the instruction of the higher level in the first and second embodiments, a single post-processing unit performs the signal transmission processing. In comparison, according to the present embodiment, a plurality of post-processing units perform the signal transmission processing for the transmission by a non-STC zone.

For the transmission by a non-STC zone, the same signal is transmitted from each transmitting antenna. Moreover, the transmitted power level of the signal transmitted from each transmitting antenna is reduced to 1/N-th (where N is the number of transmitting antennas) of the transmitted power level when the signal is transmitted via a single transmitting antenna. As a result, it becomes possible to obtain a diversity effect and enhance characteristics.

Meanwhile, regarding the preamble transmission, it is possible to shift the transmission timing while transmitting the preamble from each transmitting antenna in an identical manner to the communication apparatus according to the second embodiment.

### Fourth embodiment.

Given below is the description of a communication apparatus according to a fourth embodiment. The configuration of a transmitting device in the communication apparatus according to the present embodiment is identical to that according to the first embodiment. In the first embodiment, the communication apparatus transmits a preamble from each transmitting antenna. In the present embodiment, the communication apparatus determines the method of transmitting the preamble (i.e., determines whether to transmit the preamble from each transmitting antenna or from a single transmitting antenna) with respect to each sub-frame.

If, for example, all zones of a DL sub-frame are PUSC zones or FUSC (Full Usage of Sub Channels) zones (in other words, all zones are non-STC zones), the communication apparatus according to the present invention transmits the preamble from only a single transmitting antenna. Since the higher level (such as MAC) sends zone information and the like, the communication apparatus follows that instruction and determines whether to transmit the preamble via a single transmitting antenna or from each transmitting antenna.

For example, according to the instruction from the higher level, each post-processing unit (post-processing units 2-1 and 2-2) determines whether to perform the signal transmission processing. In the case of using a single transmitting antenna, basically, one of the transmitting antennas (for example, the transmitting antenna 3-1) is used for transmission on a consistent basis. If any failure occurs in the system including the transmitting antenna 3-1 (i.e., the post-processing unit 2-1 or the transmitting antenna 3-1), then a different transmitting antenna is used for transmission.

It is to be noted that, for sub-frame transmission from a plurality of transmitting antennas, it is possible to shift the transmission timing while transmitting the preamble from each transmitting antenna in an identical manner to the communication apparatus according to the second embodiment. Moreover, in an identical manner to the communication apparatus according to the third embodiment, transmission by non-STC zones can also be performed via a plurality of transmitting antennas.

Thus, according to the present embodiment, the method of transmitting the preamble is determined with respect to each sub-frame. As a result, depending on the transmission technique determined for each sub-frame (i.e., depending on whether transmission by STC technique is performed in at least one zone), the method of transmitting the preamble can be selected in a flexible manner.

### INDUSTRIAL APPLICABILITY

In this way, the present invention is suitable in radio communication with a plurality of transmitting antennas and particularly suitable in a communication apparatus that properly determines AGC power control amount in OFDMA technique.

## Claims

1. A communication apparatus equipped with a plurality of antennas, comprising:
a signal generating unit that, according to an instruction from a higher-level layer, performs processing on each zone generated by time-division of a transmission frame and generates transmitting signals corresponding to the number of zones; and
a transmitting unit that transmits the transmitting signal generated corresponding to each zone from one or more than one antennas, wherein
prior to transmitting the transmitting signals generated by the signal generating unit, the transmitting unit transmits a preamble from each of the antennas.

2. The communication apparatus according to claim 1, wherein, while transmitting the preamble, the transmitting unit performs adjustment such that a timing of preamble transmission via each of the antennas is shifted by a shift amount determined in advanced and then transmits the preamble.

3. The communication apparatus according to claim 1, wherein, the transmitting unit checks details of the instruction from the higher-level layer and, if transmission by a technique other than STC technique is specified in the instruction, transmits same transmitting signal from each of the antennas.

4. The communication apparatus according to claim 2, wherein, the transmitting unit checks details of the instruction from the higher-level layer and, if transmission by a technique other than STC technique is specified in the instruction, transmits same transmitting signal from each of the antennas.

5. The communication apparatus according to claim 1, wherein, the transmitting unit checks details of the instruction from the higher-level layer and, if the instruction includes at least one transmitting signal to be transmitted by STC technique in a particular transmission frame, transmits a preamble from each of the antennas prior to transmitting the at least one transmitting signal.

6. The communication apparatus according to claim 2, wherein, the transmitting unit checks details of the instruction from the higher-level layer and, if the instruction includes at least one transmitting signal to be transmitted by STC technique in a particular transmission frame, transmits a preamble from each of the antennas prior to transmitting the at least one transmitting signal.

7. The communication apparatus according to claim 3, wherein, the transmitting unit checks details of the instruction from the higher-level layer and, if the instruction includes at least one transmitting signal to be transmitted by STC technique in a particular transmission frame, transmits a preamble from each of the antennas prior to transmitting the at least one transmitting signal.

8. The communication apparatus according to claim 4, wherein, the transmitting unit checks details of the instruction from the higher-level layer and, if the instruction includes at least one transmitting signal to be transmitted by STC technique in a particular transmission frame, transmits a preamble from each of the antennas prior to transmitting the at least one transmitting signal.

9. The communication apparatus according to any one of claims 1 to 8, wherein the communication apparatus constitutes an OFDMA system of IEEE802.16 standard.
